Europäisches Patentamt

**European Patent Office**

**Office européen des brevets**

(11) Publication number: **0 170 402**
**A1**

## EUROPEAN PATENT APPLICATION

(21) Application number: **85304565.6**

(22) Date of filing: **26.06.85**

(51) Int. Cl.⁴: **B 01 D 53/20**

(30) Priority: **26.06.84 US 624720**
**20.12.84 US 684709**

(43) Date of publication of application:
**05.02.86 Bulletin 86/6**

(84) Designated Contracting States:
**BE DE FR GB IT NL**

(71) Applicant: **MERIX CORPORATION**
**192 Worcester Street**
**Wellesley, MA 02181(US)**

(72) Inventor: **Mix, Thomas W.**
**28 Atwood Street**
**Wellesley Massachusetts(US)**

(74) Representative: **Deans, Michael John Percy et al,**
**Lloyd Wise, Tregear & CO. Norman House 105-109**
**Strand**
**London WC2R OAE(GB)**

(54) **Packing elements.**

(57) In one aspect thereof, the invention describes a packing element for placement in a fluid stream in an orientation such that an axis of the element has a predetermined relationship to the predominant direction of flow of the stream. The packing element has surfaces oriented to impart to different portions of the fluid stream different components of momentum which are normal to the predominant flow direction. Intersection regions are defined by the surfaces, each intersection region being arranged to cause different portions of the fluid stream having different momentum components to meet with a tendency to cancel the momentum components.

FIG I

## PACKING ELEMENTS

This invention relates to packing elements for enhancing contact between two fluids moving through such an element.

Such packing elements are typically loaded into a reaction chamber (or washing column distilling tower) and have surfaces for deflecting the flow of the two fluids (e.g. a gas rising and a liquid falling in the chamber).

Some packing elements are meant to be loaded into the chamber in a particular orientation.

For example, Huber et al, United States Patent 3,679,537, disclose a cylindrical packing element which is loaded into a tubular chamber with the cylinder axis in lie with the axis of the chamber. In one embodiment, each cylindrical packing element is made up of corrugated layer stacked so that the corrugations of adjacent layers cross at an angle of about 90 degrees. In another embodiment, the cylindrical packing element is formed by wrapping two overlaid sheets each having an impressed vee-pattern. The vees of the two sheets have opposite orientations, and, when wrapped, all vertices of the vees lie on a single plane normal to the axis of the cylinder.

The layers of such packing elements may be made from various materials, for example textile fabric stiffened by interwoven metal wires, metal fabric, glass fibre, or sheet metal.

U.K. Patent 1,004,046, discloses perforating each corrugated layer by spaced apart oval perforations, and serrating the bottom edge of each layer.

Huber, United States Patent 4,186,159, discloses finely fluting portions of each corrugated layer.

In a first aspect thereof, the present invention provides a packing element adapted for placement in a fluid stream in an orientation such that an axis of the element has a predetermined relationship to the predominant direction of flow of the stream, the element being

2

0170402

characterised in comprising surfaces oriented to impart to different portions of the fluid stream different components of momentum which are normal to the predominant flow direction, and intersection regions defined by the surfaces, each intersection region being arranged to cause different portions of the fluid stream having different momentum components to meet with a tendency to cancel said momentum components.

In preferred embodiments, the intersection regions are made up of intersection lines where pairs of the surfaces meet and the two surfaces of each pair lie on opposite sides of an imaginary plane which contains the corresponding intersection line and is parallel to the predominant direction of flow; the surfaces are formed on successive parallel layers of the element, each layer has a pair of spaced-apart imaginary faces parallel to the axis, and the surfaces are organized in a plurality of protuberances, each rising from one face of a layer with a cross-sectional area that varies with height above that face; the protuberances are pyramids or figures of revolution closely packed across the one face, each protuberance is a truncated pyramid whose base lies on the one face and whose top is truncated by the other face; all layers are identical and the protuberances all project in the same direction in all layers; the protuberances of adjacent layers are offset with respect to each other and the adjacent layers are (or in other embodiments are not) in contact; the protuberances are truncated cones each having a cone angle between $30^{\circ}$ and $60^{\circ}$, a base between 1/2 and 6 inches (1.27 to 15.24cm) in diameter, and a cone height between 0.3 and 0.7 times the base diameter; and the surfaces are organized into layers oriented parallel to the predominant direction of flow.

In a second and alternative aspect of the invention, we provide a packing element for placement in a fluid stream, characterised in that the element comprises successive layers each defined by a pair of spaced-apart imaginary faces parallel to a particular axis of the element and each having a number of surfaces spanning the space between its faces, and in that the surfaces are arranged into pairs such that the two surfaces of each pair have a common line of intersection, and the two surfaces of each pair are oriented to lie on opposite sides of a plane which is normal to the faces and which passes through the line of intersection.

In preferred embodiments, adjacent layers are in contact at points shared in common between intersection lines located respectively on the adjacent layers; the surfaces define vees with the vertices of the vees downstream from the sides of the vees; the vees are organized in nested rows which define inverted vertices upstream from the sides of the vees; and layers are oriented parallel to the predominant direction of flow and adjacent layers touch each other at points each of which is shared in common by one of the vertices on one of the layers and one of the inverted vertices on the other layer; there are tabs projecting from and connected to the surfaces and oriented to reduce channeling of the fluids; the tabs define apertures in the surfaces; the surfaces are finely fluted; adjacent layers also contact each other at nodes shared in common by the sides of vees which are respectively on the two layers and are oriented obliquely to each other; the angle between each surface and the faces is between 30° and 75°; and the angle between the side of each vee and a line parallel to the axis is between 30° and 75°.

Different portions of the downward stream meet head-on at the intersection regions, so that their sideways momenta tend to cancel rather than create a vertex. Better mixing at the vertices results both because of the cancellation of sideways momenta and because of the greater residence time of the liquid in the intersection region caused by the cancellation of momenta. The downward momenta of the different portions of the stream do not cancel; therefore the average ratio of the downward momentum to the wideways momentum will be greater with the herringbone pattern than with straight corrugations on adjoining layers. The apertures promote good distribution of the fluids and efficient mass transfer and heat exchange, especially when oriented to interfere with fluid channeling in the troughs of each layer. The fine fluting further improves liquid distribution. In herringbone pattern embodiments where the layers are in contact, liquid leaving the vertex of a vee on one layer is in part transferred to the adjoining layer thus ensuring uniform mixing on adjoining layers at any horizontal cross-section.

In the embodiments having protuberances, channelling is avoided by providing on each layer frequent changes of fluid direction and multiple flow paths of nearly equal flow resistance between points on the layer, with continual combining and recombining of gas and liquid flows. The embodiments having spaced-apart layers with identical orientation generate the lowest pressure drop for a given surface area per unit volume. Embodiments having contact between layers with staggered orientation provide desirable interchange and mixing between layers.

In a third alternative aspect, the invention provides a packing element for placement in a fluid stream having a predominant direction of flow, characterised in that it comprises a surface oriented obliquely to said predominant direction of flow and having an upstream side facing toward said fluid stream, a downstream side facing away from said fluid stream and an array of minor protuberances all projecting away from said surface toward said downstream side, each minor protuberance forming a depression in said upstream side and a projection from said downstream side.

In a fourth alternative aspect, the invention provides a packing element for placement in a fluid stream having a predominant direction of flow, characterised in that it comprises a surface oriented obliquely to said predominant direction of flow to define a primary course of flow over said surface, and having an upstream side facing toward said fluid stream, a downstream side facing away from said fluid stream, and an array of minor protuberances projecting from said surface, said minor protuberances being arranged in a closely packed triangular lattice with the rows of said minor protuberances oriented perpendicular to said primary course of flow.

In a fifth alternative aspect, the invention provides a packing element for placement in a fluid stream having a predominant direction of flow, characterised in that it comprises a surface oriented obliquely to said predominant direction of flow and having an upstream side facing toward said fluid stream, a downstream side facing away from said fluid stream, and a minor protuberance in said surface projecting away from said surface toward said downstream side to form a depression in said upstream side and a projection from said downstream side, said minor protuberance being contoured so that said fluid located at any point on said minor protuberance will tend to flow over said minor protuberance away from said point.

In preferred embodiments, each protuberance is a figure of revolution with the axis of revolution perpendicular to the surface, e.g., each protuberance has a spherical contour.

The minor protuberances promote uniform surface wetting, uniform liquid flow and liquid mixing, and increase liquid residence time. Having all protuberances project toward the downstream side assures maximum wetting of both sides. Contouring each protuberance so that fluid at any point flows over the protuberance away from that point prevents the fluid from stagnating at points on the upstream side or dripping from the downstream side. Closely packing the protuberances in rows perpendicular to the primary flow direction promotes separation and remixing of portions of the stream with cancellation of momentum at points of remixing.

The invention is hereinafter more particularly described by way of example only with reference to the accompanying drawings, in which:-

Fig. 1 is an isometric view, partially cut away, of a reaction chamber containing a stack of packing elements constructed in accordance with the present invention;

Fig. 2 is an isometric view, partially exploded, of one of the packing elements in Fig. 1;

Figs. 3 and 4 are isometric and front views, respectively, of fragments of two adjacent layers of the packing element of Fig. 2 illustrating their points of contact;

Figs. 5 and 6 are isometric views of alternative embodiments of one fragment of Fig. 4;

Figs. 7 and 8 are alternative embodiments of packing element layers; and

Figs. 9, 10 are an isometric view and a fragmentary cross section of a representative packing element surface dimpled according to an alternative embodiment.

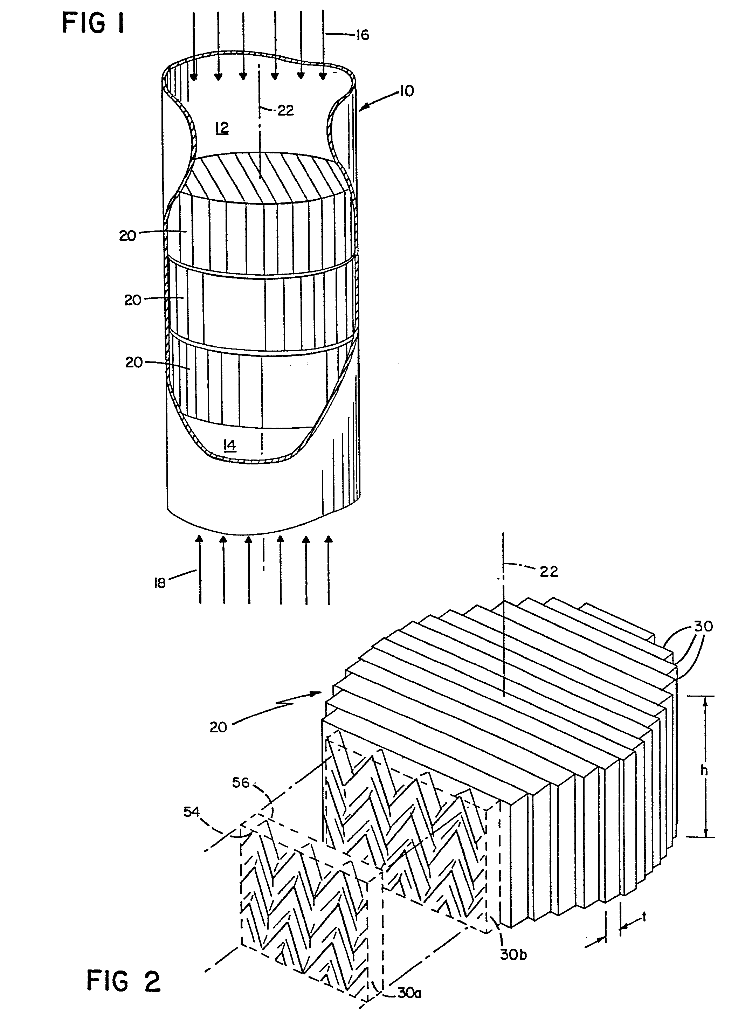

Referring to Fig. 1, reaction chamber 10 carries two fluid streams 12, 14 which are meant to be mixed and to react inside the chamber. Fluid stream 12 (e.g., a liquid) falls in a predominant direction of flow 16 while fluid stream 14 (e.g., a gas) rises in the opposite predominant direction of flow 18. A stack of identical cylindrical packing elements 20 (of which three are shown) inside chamber 10 enhance the mixing of and reaction between fluid streams 12, 14. The axis 22 of each cylindrical packing element 20 is aligned with the predominant flow directions 16, 18. Each packing element 20, however, need not have radial symmetry and the angular orientations with respect to axis 22 of different packing elements 20 stacked within chamber 10 may differ, as shown.

Referring to Fig. 2, each packing element 20 includes a series of layers 30. All of the layers 30 have a height (h) equal to the height of element 20, and all are of the same thickness (t), but they have different widths so that when assembled they essentially fill the volume of a cylinder centered on axis 22. All of the layers have the same three-dimensional configuration of creased surfaces, organized in a herringbone pattern consisting of nested rows of alternating upright vees and inverted vees. the vertices of the upright vees are downstream of the sides of the vees with respect to fluid stream 12 and the vertices of the inverted vees are upstream of the sides with respect to fluid stream 12. Adjacent layers (e.g., representative layers 30a, 30b) have their respective vee patterns oriented as explained below.

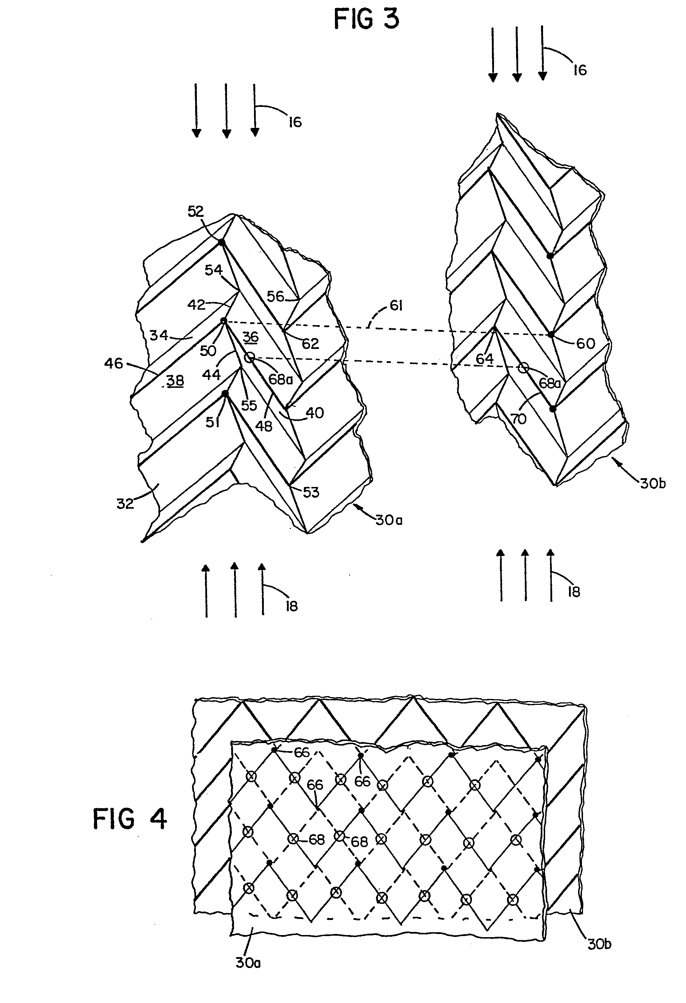

Referring to Fig. 3, fragments of layers 30a, 30b are shown opened like two pages of a book with dashed lines between them connecting representative points at which the two layers contact each other when they are assembled in the packing element.

Layer 30a includes a three-dimensional pattern of surfaces (e.g., 32), each of which is oriented obliquely to axis 22. Pairs of the surfaces (e.g., 34, 36; and 38, 40) meet at intersection lines (e.g., 42, 44). The two surfaces (e.g., 34, 36) which meet at each intersection line (e.g., 42) lie on opposite sides of the imaginary plane which both contains that intersection line and is parallel to axis 22. Adjoining surfaces (e.g., 34, 38; and 36, 40) define crease lines (e.g., 46, 48). Adjacent crease lines (e.g., 46, 48) define the sides of a vee (in this case an inverted vee) with a vertex 50 between the sides. The surfaces are arranged so that the vees defined by them are organized in rows of alternating upright and inverted vees and the rows are nested to form columns of upright vees and columns of inverted vees (the fragment of layer 30a in Fig. 3 shows a column of inverted vees to the left of a column of upright vees). The vertices 50 of the vees lie in two parallel planes (e.g., 54, 56 in Fig. 2) which are spaced apart by between 1/4 and 3 inches (0.635 to 7.62cm) and which define imaginary faces of the layer, with the surfaces 32 interposed between the two faces. For example, vertices 50, 51, 52, 53 lie on one face of layer 30a, while vertices 54, 55, 56 lie on the opposite face of layer 30a.

Adjacent layers 30a and 30b have their vee patterns offset from each other such that when the layers are overlaid, the vertices of the upright vees on layer 30a touch the vertices of inverted vees on layer 30b and vice versa. For example, vertex 50 touches vertex 60 (as indicated by dashed line 61 which connects them), vertex 62 touches vertex 64, and so on.

Referring to Fig. 4, the vee patterns on layers 30a, 30b are shown as they overlap and contact each other at vertices 66.

Contact is also made between layers 30a, 30b at an array of nodes 68 each node lying on crease lines of both layers. For example, node 68a of Fig. 3 lies on crease line 78 of layer 30a and on crease line 70 of layer 30b.

The angle between each surface 32 and each of the faces 54, 56 is between about 30° and about 75°, e.g., 45°, and the angle between each crease line and axis 22 is also between about 30° and about 75°, e.g., 45°.

As falling liquid stream 12 passes down through packing element 22, different portions of the stream pass over different surfaces of the element which impart to those different portions different components of momentum in directions normal to the predominant flow of stream 12. As the liquid flows down over each surface, a large wetted area is produced. When different descending portions of the stream meet at the vertices and nodes, desirable mixing occurs. At the nodes the stream portion flowing down one surface of one layer meets a portion flowing with the opposite sideways momentum component down a corresponding surface of the other layer. A vortex is created by the opposite momenta of the two portions which do not meet head-on, because they are being carried on different layers.

By contrast, at the vertices the two intersecting portions of the fluid stream are carried on two surfaces of the same layer so that they meet head-on and their respective sideways momenta tend to cancel. The downward momenta of the two portions of the fluid stream do not cancel, so the average ratio of the downward momentum to the sideways momentum will be greater than for packing elements which do not have the heerringbone pattern. Thus, the fluid will flow more uniformly down the herringbone corrugated plates with less channeling in the troughs. Mixing of the fluid at the vertex intersection regions will be more complete than at the nodes, both because of the head-on nature of their collission, and because of the greater residence time of the fluid at the intersection region resulting from the cancellation of momenta. Fluid leaving the vertex of a vee on one layer is in part transferred to the adjoining layer thus assuring uniform mixing of the fluid on both ajoining layers at any horizontal cross-section.

Each layer is fabricated by passing a sheet of metal foil through appropriately configured gears with teeth or other fixtures to hold the metal in place as it traverses the gears to prevent walking.

Other embodiments are within the following claims.

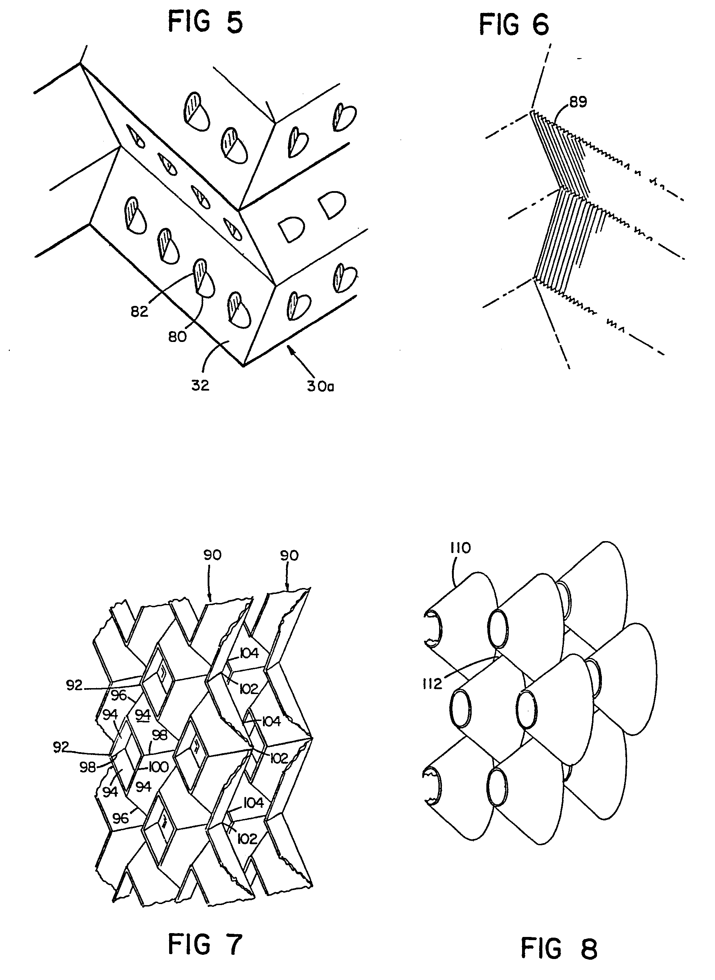

For example, referring to Fig. 5, each surface 32 can be perforated by D-shape cuts 80, with the resulting D-shaped tabs 82 being bent perpendicularly to surface 32. The tabs are sited and arranged to avoid

0170402

·interferring with the contact between adjacent layers at the vertices and nodes. The tabs are oriented to interfere with the channelling of fluid as it runs down surface 32.

Referring to Fig. 6, fine flutes 89 can also be formed on each surface 32 to further improve the distribution of fluid over the surface.

Referring to Fig. 7, each layer 90 of the packing element can be comprised of a regular arrangement of pyramids 92. Each pyramid 92 has four surfaces 94 which meet in four intersection lines 96, 98. Two of them (96) lie in a plane parallel to axis 22; the other two (98) lie in a plane normal to axis 22. The pyramids 92 are densely packed with their bases lying on and defining a first face of layer 90. The pyramids are truncated by a plane parallel to the first face to define square apertures 100, which all lie on a second face of layer 90. The location on the first face where four continguous pyramids meet define vertices 102. Adjacent layers of the packing element are offset so that each vertex 102 on one layer lies within a square aperture 100 of the adjacent layers. There is a contact node 104 between each leg of the base of each pyramid on one layer and one side of square aperture 100 on the adjacent layer.

This arrangment of surfaces reduces channeling of the fluids by providing frequent changes of flow direction and multiple flow paths of nearly equal flow resistance between points with continual combining and recombining of gas and liquid flows. The contact between offset layers provides for interchange and mixing between adjacent layers.

The layers in Fig. 7 may alternatively be held apart, without contact and without offsetting, which produces a lower pressure drop for a given surface area per unit volume.

Apertures can be provided in the surfaces of pyramid 92 to promote fluid interchange and mixing and uniform distribution between the two sides of each layer. The apertures can be created by slitting each surface prior to forming the pyramids with slits parallel to the base of the to-be-formed pyramids, so that the slits expand to form apertures when the packing is formed.

Fine fluting can be provided on the surfaces of the pyramid to promote wetting of the entire surface and to counter the tendency for rivulets to form. The fluting can be lateral or normal to the slit direction or to the predominant direction of fluid flow.

The pyramid surfaces are preferably oriented at between 30° and 60° to the faces of the layer. The pyramids are truncated at between 1/4 and 3/4 of their otherwise full height. The ratio of the horizontal length to vertical length of the base of each pyramid is preferably between 1/2 and 2.

Referring to Fig. 8, the pyramids can be replaced by cones 110 (e.g., nested cones with a cone angle between about 30° and about 60°, with bases having diameters between about 1/2 and 6 inches (1.27 to 15.24cm) and being joined by plates 112 all lying in a common plane, and a cone height of between about 0.3 and about 0.7 times the base diameter) or other figures-of-revolution, by pyramids having more than four sides, by protuberances which have elliptical or rectangular cross-sections parallel to their bases, or by protuberances which are _____

stretched or compressed in the direction of axis 22 so that a cross-section taken by a plane which is normal both to the axis and to the base of the protuberance differs from a cross-section taken by a plane which is normal to the base but parallel to the axis.

In embodiments having large-scale protuberances in the form of pyramids, cones, or other figures of revolution, the surfaces of the protuberances on each layer of the element may be contoured with similar smaller-scale protuberances having the form of pyramids, cones, or other figures of revolution. In embodiments having large-scale herringbone-type surfaces with projecting tabs on each surface, the tabs may be protuberances having the form of pyramids, cones, or other figures of revolution on a smaller scale than the herringbone-type vee contours. In both classes of embodiments, the smaller-scale protuberances promote uniform surface wetting, uniform liquid flow and liquid mixing, and increase liquid residence time. The smaller-scale protuberances need not all be oriented in the same direction.

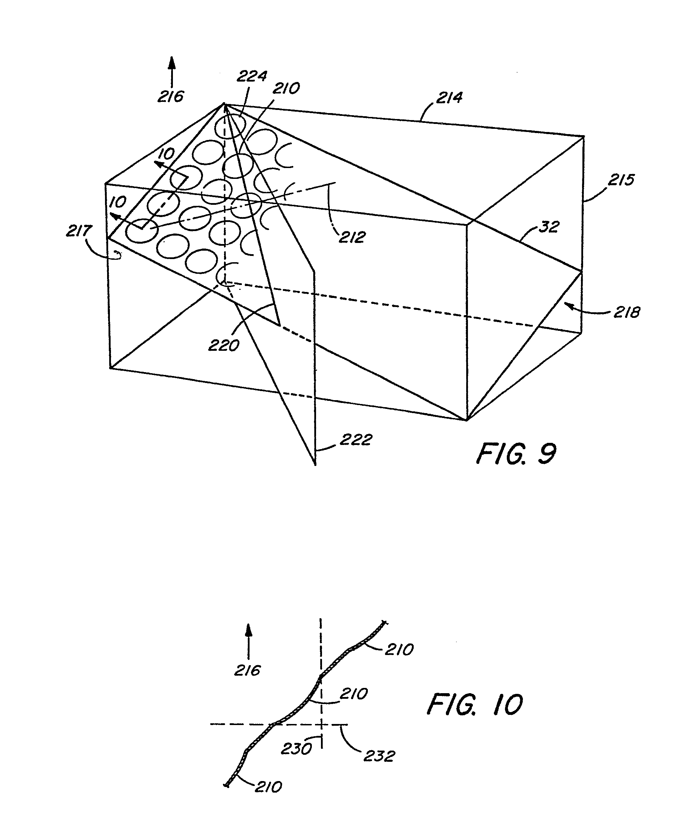

Referring to Fig. 9, in some embodiments having small-scale protuberances, each surface 32 can be covered with an array of minor protuberances (dimples) 210 arranged along parallel rows 212. Rows 212 are staggered so that the dimples 210 are closely packed on triangular centers. In Fig. 9, surface 32 is shown within an imaginary box 214 whose edges 215 are oriented vertically, that is, the top of the packing tower is located in the direction indicated by arrow 216. Surface 32 is canted at an angle with reference to both planes 217, 218. Because of the canting, the steepest slope on surface 32 is along a line 220 representing the intersection between surface 32 and an imaginary vertical plane 222. The primary course of flow over surface 32 is parallel to line 220. Rows 212 are oriented perpendicular to line 220 so that fluid flowing along line 220 or along any line parallel to line 220 encounters a series of dimples 32. Each dimple is about 1/8" (0.3175cm) in diameter.

Referring to Fig. 10, all of the dimples are pressed into surface 32 to form depressions when viewed from above and hence protrusions when viewed from below. Each dimple is shallow (e.g. 1/16" (0.15875cm) deep) and spherically contoured in such a way that all of the surface encompassed by the dimple is oriented between the vertical axis 230 and the horizontal axis 232. Thus fluid flowing along either the upstream side (facing toward the fluid stream) or the downstream side (facing away from the fluid stream) of surface 32 encounters a matrix of dimples which improve wetting. Because the dimples are shallow, fluid will not collect in the depressions or form droplets on the protrusions. Instead, fluid located at any point on the protrusion or depression will tend to flow away from that point. The orientation of the rows 212 with respect to line 220 encourages the fluid to mix and divide as it flows down across surface 32, with lateral momenta being cancelled as the divided portions remix.

In other embodiments the dimples can be other figures of revolution or other contours, and an array of apertures can be formed in the dimple surfaces, the apertures being oriented vertically so as not to permit all of the fluid to drain from the top side to the bottom side of surface 32.

The layers may be fabricated of knitted or woven fabrics, which reduces the tendency for fluid channelling.

CLAIMS

1.    A packing element adapted for placement in a fluid stream in an orientation such that an axis of the element has a predetermined relationship to the predominant direction of flow of the stream, the element being characterised in comprising
        surfaces oriented to impart to different portions of the fluid stream different components of momentum which are normal to the predominant flow direction, and
        intersection regions defined by the surfaces, each intersection region being arranged to cause different portions of the fluid stream having different momentum components to meet with a tendency to cancel said momentum components.

2.    A packing element according to Claim 1, further characterised in that the intersection regions comprise intersection lines where pairs of the surfaces meet and in that the two surfaces of each pair lie on opposite sides of an imaginary plane which contains the corresponding intersection line and is parallel to the predominant direction of flow.

3.    A packing element according to Claims 1 or 2, further characterised in that the surfaces are formed on successive parallel layers of the element, in that each layer has a pair of spaced-apart imaginary faces parallel to the axis, and in that the surfaces are organized in a plurality of protuberances, each rising from one face of a layer with a cross-sectional area that varies with height above that face.

4.    A packing element according to Claim 3, further characterised in that the protuberances are pyramids or figures of revolution closely packed across the one face.

5.    A packing element according to Claims 3 or 4, further characterised in that each protuberance is a truncated pyramid whose base lies on the one face and whose top is truncated by the other face.

2    0170402

6. A packing element according to Claims 3 or 4, further characterised in that the protuberances are truncated cones each having a cone angle between $30^o$ and $60^o$, a base between 1/2 and 6 inches (1.27 and 15.24cm) in diameter and a cone height between 0.3 and 0.7 times the base diameter.

7. A packing element according to any of Claims 3 to 6, further characterised in that all layers are identical and the protuberances all project in the same direction in all layers.

8. A packing element according to Claim 7, further characterised in that the protuberances of adjacent layers are offset with respect to each other and the adjacent layers are in contact.

9. A packing element according to any of Claims 3 to 7, further characterised in that adjacent layers are not in contact.

10. A packing element according to Claim 1, further characterised in that the surfaces are organized into layers oriented parallel to the predominant direction of flow.

11. A packing element for placement in a fluid stream, characterised in that the element comprises

successive layers each defined by a pair of spaced-apart imaginary faces parallel to a particular axis of the element and each having a number of surfaces spanning the space between its faces,

and in that the surfaces are arranged into pairs such that the two surfaces of each pair have a common line of intersection, and the two surfaces of each pair are oriented to lie on opposite sides of a plane which is normal to the faces and which passes through the line of intersection.

12. A packing element according to both Claim 10 and Claim 11, further characterised in that adjacent layers are in contact.

13. A packing element according to Claim 12, further characterised in that adjacent layers touch each other at points shared in common between said intersection lines located respectively on the adjacent layers.

14. A packing element according to Claim 13, further characterised in that adjacent layers also contact each other at nodes shared in common by the sides of vees which are respectively on the two layers and are oriented obliquely to each other.

15. A packing element according to Claims 10 or 11, further characterised in that the surfaces define vees with the vertices of the vees downstream from the sides of the vees.

16. A packing element of Claim 15, further characterised in that the angle between the side of each vee and a line parallel to the axis is between $30^{\circ}$ and $75^{\circ}$.

17. A packing element according to Claims 15 or 16, further characterised in that the vees are organized in nested rows which define inverted vertices upstream from the sides of the vees.

18. A packing element according to Claim 17, further characterised in that the layers are oriented parallel to the predominant direction of flow and in that adjacent layers touch each other at points each of which is shared in common by one of the vertices on one of the layers and one of the inverted vertices on the other layer.

19. A packing element according to any of Claims 10 to 18, characterised in further comprising tabs projecting from and connected to the surfaces and oriented to reduce channelling of the fluids.

20. A packing element according to Claim 19, further characterised in that the tabs define apertures in the surfaces.

21. A packing element according to any of Claims 10 to 20, further characterised in that the surfaces are finely fluted.

22.   A packing element according to Claim 11 or any claim appendent thereto, further characterised in that the angle between each surface and the faces is between $30^{\circ}$ and $75^{\circ}$.

23.   A packing element for placement in a fluid stream having a predominant direction of flow, characterised in that it comprises

a surface oriented obliquely to said predominant direction of flow and having

an upstream side facing toward said fluid stream,

a downstream side facing away from said fluid stream and

an array of minor protuberances all projecting away from said surface toward said downstream side, each minor protuberance forming a depression in said upstream side and a projection from said downstream side.

24.   A packing element according to Claims 1 or 11, further characterised in that

each said surface has

an upstream side facing toward said fluid stream,

a downstream side facing away from said fluid stream, and

an array of minor protuberances all projecting away from said surface toward said downstream side, each minor protuberance forming a depression in said upstream side and a projection from said downstream side.

25.   A packing element according to Claims 23 or 24, further characterised in that said minor protuberances are arranged in a closely packed triangular lattice with the rows of said protuberances oriented perpendicular to a primary direction of flow over said surface.

26.   A packing element for placement in a fluid stream having a predominant direction of flow, characterised in that it comprises

a surface oriented obliquely to said predominant direction of flow to define a primary course of flow over said surface, and having an upstream side facing toward said fluid stream,

a downstream side facing away from said fluid stream, and

an array of minor protuberances projecting from said surface, said minor protuberances being arranged in a closely packed triangular lattice with the rows of said minor protuberances oriented perpendicular to said primary course of flow.

27.   A packing element according to Claims 1 or 11, further characterised in that

each said surface is oriented to define a primary course of flow over said surface and has an upstream side facing toward said fluid stream,

a downstream side facing away from said fluid stream, and

an array of minor protuberances projecting from said surface, said minor protuberances being arranged in a closely packed triangular lattice with the rows of said minor protuberances oriented perpendicular to said primary course of flow.

28.   A  packing element according to any of Claims 23 to 27, further characterised in that each one of said minor protuberances is contoured so that said fluid located at any point on said minor protuberance will tend to flow over said minor protuberance away from said point.

29.   A packing element for placement in a fluid stream having a predominant direction of flow, characterised in that it comprises

a surface oriented obliquely to said predominant direction of flow and having an upstream side facing toward said fluid stream,

a downstream side facing away from said fluid stream, and

a minor protuberance in said surface projecting away from said surface toward said downstream side to form a depression in said upstream side and a projection from said downstream side, said minor protuberance being contoured so that said fluid located at any point on said minor protuberance will tend to flow over said minor protuberance away from said point.

6

0170402

30. A packing element according to Claims 1 or 11, further characterised in that

each said surface has an upstream side facing toward said fluid stream,

a downstream side facing away from said fluid stream, and

a minor protuberance in said surface projecting away from said surface toward said downstream side to form a depression in said upstream side and a projection from said downstream side, said minor protuberance being contoured so that said fluid located at any point on said minor protuberance will tend to flow over said minor protuberance away from said point.

31. A packing element according to any of Claims 23 to 30, further characterised in that the or each said minor protuberance is a figure of revolution with the axis of revolution perpendicular to said surface.

32. A packing element of Claim 30, further characterised in that the or each said minor protuberance has a part-spherical contour.

FIG 1

FIG 2

FIG 3

FIG 4

0170402

FIG 5

FIG 6

FIG 7

FIG 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE-A-3 140 640 (J. GROCHOL) * Figures 1-3; page 1, last alinéa - page 10 * | 1 | B 01 D 53/18 |
| A | BE-A- 717 195 (I.C.I.) * Figures; page 10, last alinéa - page 12, last alinéa * | 3-8 | |
| A | EP-A-0 069 241 (KÜHNI) * Whole document * | 1 | |

TECHNICAL FIELDS SEARCHED (Int Cl 4)

B 01 D

The present search report has been drawn up for all claims

| Place of search | Date of completion of the search | Examiner |
|---|---|---|
| THE HAGUE | 09-10-1985 | BOGAERTS M.L.M. |